Europäisches Patentamt

**European Patent Office**

Office européen des brevets

(11) Numéro de publication: **0 230 180 B1**

# (12) FASCICULE DE BREVET EUROPEEN

(45) Date de publication du fascicule du brevet:
07.11.90

(21) Numéro de dépôt: **86402775.0**

(22) Date de dépôt: **11.12.86**

(51) Int. Cl.⁵: **F27B 3/12**, C21C 5/52, H05B 7/02

(54) Procédé et installation d'entretien du revêtement d'une cuve de four.

(30) Priorité: **13.12.85 FR 8518512**

(43) Date de publication de la demande:
**29.07.87 Bulletin 87/31**

(45) Mention de la délivrance du brevet:
**07.11.90 Bulletin 90/45**

(84) Etats contractants désignés:
**AT CH DE ES GB IT LI SE**

(56) Documents cités:
**FR-A- 2 169 805**
**FR-A- 2 364 419**
**GB-A- 992 993**
**US-A- 3 312 544**
**US-A- 3 952 140**

(73) Titulaire: **CLECIM SA, 107 boulevard de la Mission Marchand B.P. 306, F-92402 Courbevoie Cédex(FR)**

(72) Inventeur: **Barbe, Jacques, 23 rue du Docteur Charcot, F-42100 St Etienne(FR)**
Inventeur: **Vatant, Robert, 10 rue des Charmilles, F-42400 St Chamond(FR)**

(74) Mandataire: **Le Brusque, Maurice et al, Cabinet Harlé et Phélip 21, rue de la Rochefoucauld, F-75009 Paris(FR)**

## Description

L'invention a pour objet une installation de fusion de métal comportant un four métallurgique de, fusion en forme de cuve, et plus spécialement un four à arc.

Dans les fours à arc électrique, on réalise la fusion de ferrailles dans une cuve comportant, d'une façon générale, un fond et une paroi latérale.

La cuve est munie d'autre part d'un système de refroidissement, par exemple par circulation d'eau, mais généralement le refroidissement n'est effectué que sur la paroi latérale car il serait difficile et même dangereux en raison de l'usure, de placer un système de circulation d'eau à l'intérieur du fond.

Par ailleurs, après la fusion des ferrailles, le métal fondu doit être déversé dans une poche de coulée et, généralement, la coulée s'effectue en inclinant légèrement la cuve autour d'un axe de basculement. A cet effet, la cuve du four est placée sur un plancher de travail surélevé par rapport au sol de l'atelier sur lequel circulent des chariots de transport des poches. Ce plancher de travail supportant la cuve est monté de façon à pouvoir basculer autour d'un axe horizontal sous l'action, par exemple, d'un vérin. Ainsi, ayant amené une poche sur son chariot de transport à proximité de la cuve, en position de coulée, celle-ci peut être réalisée en inclinant légèrement le plancher de travail et la cuve au moyen des vérins.

Le revêtement réfractaire est soumis à une usure importante et doit être réparé ou remplacé périodiquement. Le brevet US 3 952 140 divulgue un four à arc électrique comportant une cuve réalisée en plusieurs parties, notamment un fond et une paroi latérale, ces deux parties étant recouvertes d'un revêtement réfractaire.

Des moyens pour enlever les différentes parties du four, afin de remplacer facilement le revêtement réfractaire, sont placés au-dessus de l'installation et ceci implique l'enlèvement de la paroi latérale avant d'atteindre le fond.

Or il est apparu qu'il serait intéressant de pouvoir agir directement sur le fond qui est soumis à une usure plus importante que la paroi latérale. En outre, même quand la réparation est limitée au fond, cette opération est très longue et nécessite un arrêt de production du four et, dans certains cas, de l'ensemble de l'aciérie.

L'invention a pour objet une installation de fusion de métal comprenant un four en forme de cuve perfectionnée de façon à remédier à cet inconvénient en réduisant au minimum le temps d'arrêt du four pour le remplacement du revêtement. A cet effet, la cuve est réalisée en deux parties susceptibles d'être séparées et constituant respectivement le fond et la paroi latérale refroidie, recouverts d'un revêtement réfractaire, l'ensemble étant supporté par un plancher de travail.

On a déjà eu l'idée, par exemple dans le document GB-A 992 993 d'utiliser une cuve métallurgique munie d'un fond amovible. Cependant, le document GB-A 992 993 concerne un convertisseur d'aciérie c'est-à-dire une installation assez différente, dans sa constitution et dans son fonctionnement, d'un four métallurgique de fusion.

Conformément à l'invention, la paroi latérale de la cuve prend appui directement sur le plancher de travail et le fond est fixé sur un châssis mobile de support monté coulissant le long de guidages verticaux s'étendant au-dessus du plancher de travail entre ce dernier et un plancher inférieur, le plancher de travail étant muni d'un orifice central de section supérieure à celle du fond, à l'intérieur duquel ce dernier peut être introduit et de moyens amovibles de blocage du fond et l'installation comprend des moyens de soulèvement et d'abaissement du châssis mobile portant le fond le long des guidages entre une position haute de mise en service sur le plancher de travail, pour laquelle le fond se trouve dans le prolongement de la paroi latérale et une position basse de retrait et des moyens de transport du fond entre la position basse de retrait et un poste d'entretien à l'écart du four.

Dans un mode de réalisation préférentiel, les moyens de transport du fond sont constitués par au moins un chariot de transport circulant sur des rails placés sur le plancher inférieur entre une position basse de retrait et un poste d'entretien.

Selon une autre caractéristique de l'invention, le châssis mobile du support du fond est muni de pattes d'appui susceptibles de reposer sur des supports montés coulissants le long des guidages et actionnés par des vérins pour l'abaissement et le soulèvement du châssis mobile avec le four entre la position haute de travail et la position basse de retrait.

Dans la position haute, les supports actionnés par les vérins viennent se placer sous les pattes du châssis mobile, en position basse, lesdites pattes viennent reposer sur des pieds ménagés sur le chariot de transport.

Mais l'invention sera mieux comprise par la description suivante d'un mode de réalisation particulier, donné à titre de simple exemple et représenté sur les dessins annexés.

Fig. 1 est une vue en coupe verticale suivant la ligne 1–1 de la figure 2 passant par l'axe longitudinal de la cuve;

Fig. 2 est une vue de dessus de l'installation;

Fig. 3 est une vue du fond de remplacement sur son chariot de transport, en coupe horizontale selon la ligne III–III de la figure 1;

Fig. 4 est une vue en coupe verticale selon la ligne IV–IV de la figure 1;

Fig. 5 est une vue en coupe verticale selon la ligne V–V de la figure 1;

Fig. 6 est une vue de détail du dispositif de blocage du fond.

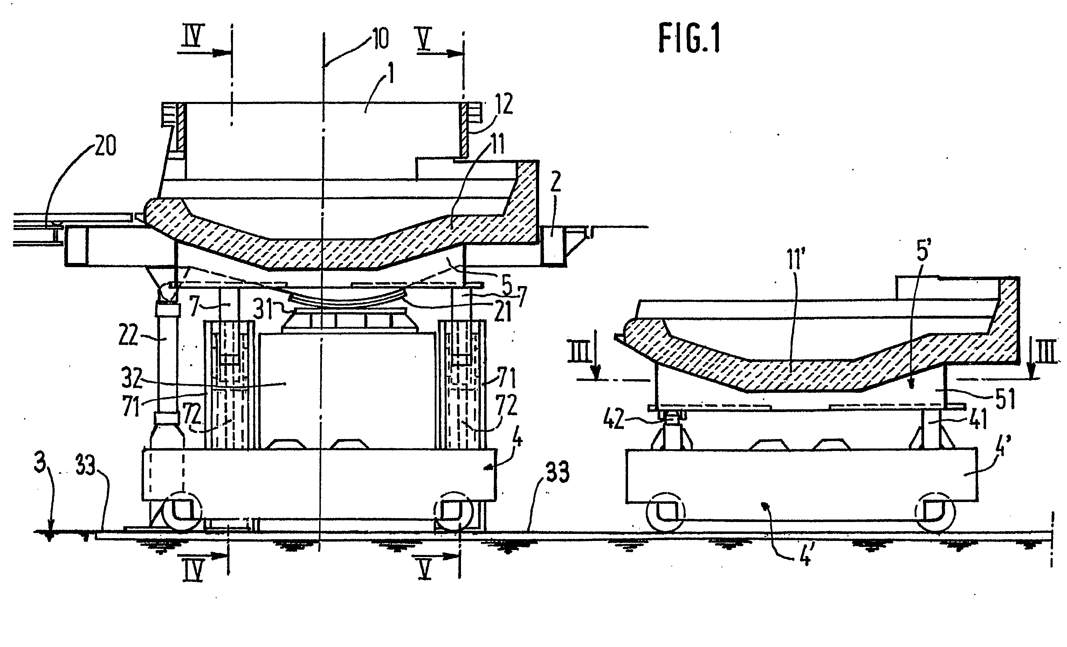

Sur la figure 1, on a représenté, en coupe longitudinale, l'ensemble de l'installation qui comprend une cuve 1 de four électrique supportée par un plancher de travail 2 surélevé par rapport au sol 3 de l'atelier sur lequel peut se déplacer au moins un chariot de transport 4.

Selon une disposition connue, le plancher 2 de travail de la cuve peut être incliné autour d'un axe horizontal de basculement pour réaliser la coulée. A cet effet, le plancher de travail 2 a la forme d'un cadre qui vient se placer dans une ouverture correspondante d'un plancher de manoeuvre 20 et qui s'appuie, par l'intermédiaire de surfaces arrondies 21,sur des surfaces planes 31 ménagées à la partie supérieure de deux massifs 32 se dressant de part et d'autre de l'axe 10 de la cuve. Le cadre 2 prend appui d'autre part sur au moins un vérin 22 permettant de commander une légère inclinaison du plancher 2 et donc de la cuve 1 autour du pivot horizontal ainsi constitué .

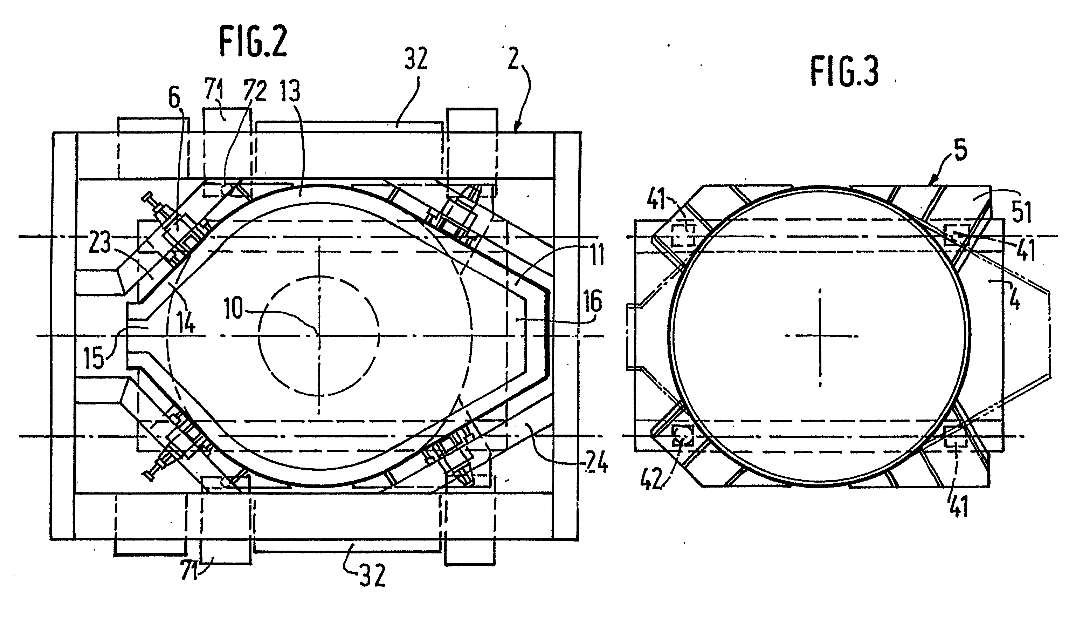

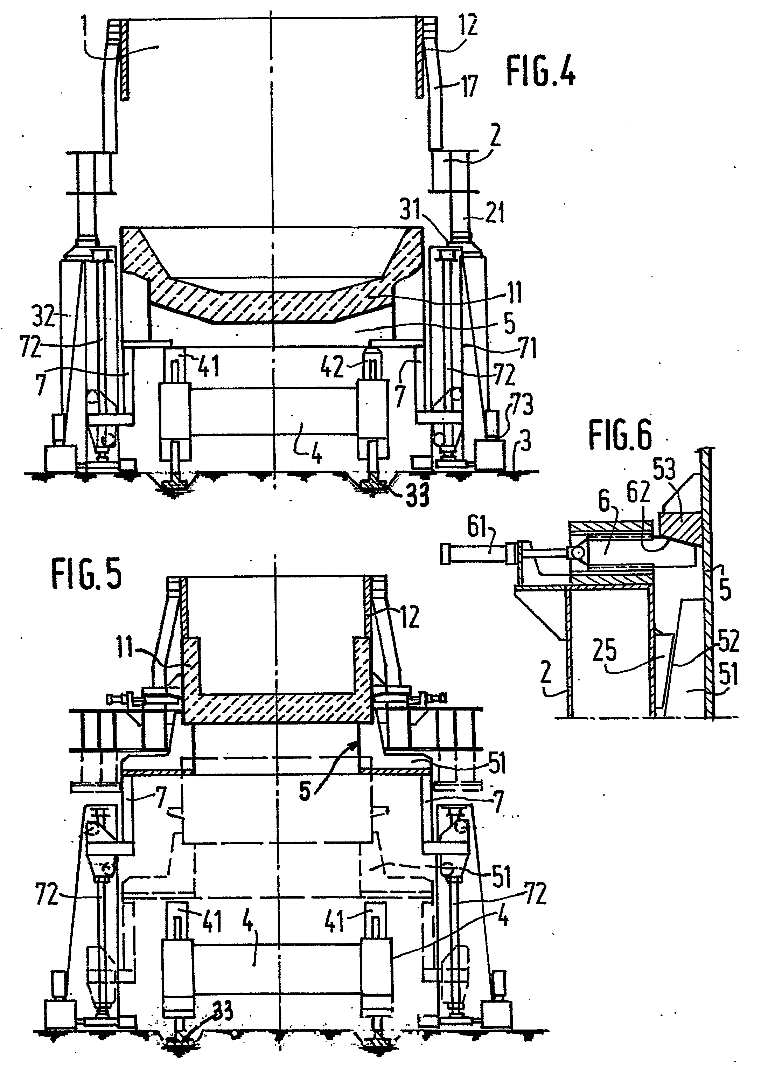

Le plancher de travail 2 comprend souvent un orifice central dans lequel vient s'encastrer la cuve 1. Cependant, dans le cas de l'invention,cet orifice central 23 a une section supérieure à celle du fond de la cuve 1. En effet, selon une caractéristique de l'invention , la cuve 1 est constituée de deux parties sépara bles, respectivement un fond 11 et une paroi latérale 12. De façon classique, la cuve a, en section horizontale, la forme représentée sur la figure comportant une partie centrale arrondie 13 prolongée par des parois planes convergentes 14 consti-. tuant une partie avant de coulée 15 et une partie arrière 16. Le cadre 2 sera donc muni dans ses angles d'entretoises inclinées 24 parallèles aux parois 14 de la cuve en formant un orifice 23 de section octogonale supérieure à celle de la cuve. Cette dernière peut ainsi passer librement,dans le sens vertical, à l'intérieur de l'orifice 23 et elle est bloquée en position haute sur le cadre 2 par des moyens amovibles de blocage 6.A cet effet, alors que la paroi latérale 12 de la cuve s'appuie directement,par des pieds 17,sur le plancher de travail 2,le fond 11 est fixé sur un châssis mobile 6 représenté notamment sur les figures 3 et 5.

De préférence ,le châssis mobile 5 a une section extérieure circulaire de diamètre correspondant sensiblement à celui d'une poche de coulée et il est muni de quatre pattes 51 qui prennent appui sur quatre supports 7 déplaçables verticalement.

Les supports 7 peuvent en effet coulisser le long de guidages verticaux 71 s'étendant dans l'espace compris entre le plancher de travail 2 et un plancher inférieur constitué notamment par le sol 3 de l'atelier et sur lequel peut se déplacer un chariot 4.Des vérins électromécaniques 72 actionnés en synchronisme par des moteurs 73 prennent appui d'un côté sur le sol 3 et de l'autre sur chacun des supports coulissants 7.Il est ainsi possible de soulever ou d'abaisser le châssis 5 mobile du fond 11 entre une position haute de mise en service, représentée notamment sur les figures 1 et 5,pour laquelle le fond 11 est placé au contact et dans le prolongement de la partie inférieure de la paroi latérale 12,et une position basse de retrait, représentée notamment sur la figure 4,pour la quelle le châssis mobile 5 vient reposer sur le chariot 4.

Le·chariot 4 roule sur des rails 33 fixés sur le sol 3 de l'atelier et peut être constitué par le chariot de transport des poches de coulée, les rails étant prolongés d'un côté jusqu'à un poste d'entretien des fonds et de l'autre jusqu'à la position de retrait du fond placé entre les massifs d'appui 32 dans l'axe 10 de la cuve et du cadre 2.

Pour supporter les poches de coulée le chariot de transport 4 est souvent muni de quatre pieds 41 dont l'un, 42, est avantageusement réglable de façon à déterminer un appui parfaitement stable. Les pattes d'appui 51 du châssis mobile 5 sont conformées de façon à venir prendre appui sur les pieds 41 du châssis 4 qui peut ainsi transporter indifféremment des poches de coulée ou des fonds 11.

Sur la figure 6, on a représenté en détail l'un des moyens 6 de blocage du fond en position haute de service .

Le plancher de travail 2 est muni de cales 25 à faces inclinées en forme de coin qui coopèrent avec des faces de blocage 52 d'inclinaison correspondante ménagées sur les pattes d'appui 51 du châssis mobile 5 de telle sorte que ce dernier soit parfaitement maintenu latéralement lorsqu'il arrive en position haute de mise en service . Dans cette position,au moins deux verrous 6 montés coulissants radialement dans des orifices correspondants du plancher 2 et actionnés en synchronisme par des vérins 61 viennent se placer sous des butées d'appui 53,les faces inférieures de ces dernières étant inclinées de façon à coopérer avec des faces inclinées 62 ménagées aux extrémités des verrous 6 pour réaliser le blocage. Ainsi,en position haute de mise en service,le châssis 5 de support du fond 11 est parfaitement maintenu sur le plancher de travail 2 par les coins 25 et les verrous 6.

L'installation fonctionne donc de la façon suivante :

Lorsque le fond 11 de la cuve doit être réparé, le four étant arrêté et le plancher de travail 2 mis à l'horizontale dans le prolongement du plancher de manoeuvre 20, on soulève les supports 7 au moyen des vérins 72 jusqu'à ce qu'ils viennent prendre en charge le châssis 5 avec le fond 11 en déchargeant les verrous 6,un joint, nécessaire de toute façon pour les dilatations, étant ménagé entre le fond 11 et la paroi latérale 12.

Les verrous 6 peuvent alors être rentrés au moyen des vérins 61 et les supports 7 sont abaissés en entraînant le châssis 5 et le fond 11 qui descend verticalement dans l'orifice 23 du plancher de travail 2.

Les supports 7 sont ainsi abaissés jusqu'à ce que le châssis 5 vienne reposer par ses pattes 51 sur les pieds 41 du chariot de transport 4 préalablement amené dans la position de retrait,dans l'axe 10 de la cuve .

Le chariot 4 portant le fond 11 à réparer est alors écarté et amené au poste d'entretien alors qu'un nouveau fond 11′ , placé en attente sur un autre chariot 4′, à proximité du four,est amené à son tour en position basse dans l'axe de la cuve.

Les supports 7 sont alors soulevés, prennent en charge le châssis mobile 5′ portant le fond de remplacement 11′ et le soulèvent en position haute de service, jusqu'au contact avec la paroi 5 latérale 12. Les verrous 6 sont alors mis en place pour prendre en charge le châssis mobile 5 et les supports 7 peuvent être abaissés, le nouveau fond étant alors supporté par le plancher 2.

Pendant toute cette opération, la paroi latérale 12 a pu rester en place et le circuit de refroidissement n'avait pas à être déconnecté, de telle sorte que le refroidissement pouvait se poursuivre.

Il en est de même de l'ensemble des organes placés sur la cuve ou autour d'elle, qui peut rester en place, cet avantage pouvant être étendu à tout l'environnement supérieur du four tel que goulottes pour additions, brûleurs de chauffage, lances d'insufflation de matériaux d'addition ou de gaz, appareils de mesure, etc...

C'est là l'un des avantages importants de l'invention car, jusqu'à présent, on était obligé de déconnecter le circuit de refroidissement et de démonter tous les organes annexes pour effectuer le remplacement de la cuve et cette opération, assez délicate en raison de la température du four, était très longue et non sans danger. Grâce à l'invention, au contraire, l'ensemble de l'opération est beaucoup plus simple et rapide, le remplacement d'un fond pouvant être effectué, par exemple en deux ou trois heures.

Bien entendu, il est nécessaire, de temps en temps de remplacer également les parois latérales mais, comme on l'a indiqué plus haut, ces remplacements sont beaucoup moins fréquents et les réparations peuvent d'ailleurs être faites sur place assez rapidement puisque le circuit de refroidissement de la paroi latérale peut rester en service pendant le changement du fond.

Un autre avantage de l'invention réside dans le fait qu'elle ne nécessite pas de modifications très importantes de l'installation à part la séparation de la cuve en deux parties et peut donc être adaptée à des installations existantes. En effet, le plancher de support est généralement déjà surélevé par rapport au sol de l'atelier et il suffit donc de le modifier pour permettre le passage du fond et d'installer au-dessous les moyens de soulèvement et de guidage du fond. En outre, en les aménageant convenablement, il est possible d'utiliser comme chariots de transport des fonds, le chariot de poches de coulée et/ou le chariot à cuvier pour scories, ces chariots étant simplement aménagés pour ce transport, les chemins de roulement de ces chariots étant simplement prolongés au dessous de la cuve et jusqu'à un poste d'entretien.

Toutefois, s'il est avantageux d'utiliser des chariots existants, on pourrait également se servir de chariots spécialisés. En outre, il est évidemment préférable de disposer d'au moins deux chariots de transport mais un seul chariot serait suffisant dans des installations plus rudimentaires.

Bien entendu, l'invention pourrait faire l'objet de variantes, notamment en utilisant des moyens équivalents à ceux qui viennent d'être décrits.

Ainsi, il semble normal de déplacer les fonds sur des chariots, surtout s'ils existent déjà, mais d'autres moyens de transport, par pont roulant, par exemple, peuvent être envisagés.

De même, dans l'exemple représenté, le fond 11 repose sur un châssis mobile 5 mais les moyens de support et de blocage en position haute peuvent être aménagés directement sur le fond si la constitution et la résistance de celui-ci le permettent.

Par ailleurs, on a représenté une installation classique dans laquelle le plancher de support de la cuve 1 et le plancher de manœuvre 20 sont surélevés par rapport au sol 3 de l'atelier qui forme alors le plancher inférieur de manutention des fonds. Cependant, ce plancher inférieur pourrait également être ménagé dans une fosse placée au-dessous du plancher de support 2 si celui-ci était au niveau du sol de l'atelier.

Enfin, on a décrit l'invention dans son application préférentielle à un four à arc de fusion mais elle pourrait également s'appliquer à d'autres types de fours, tels que les fours basculants coulant soit par bec soit par busette, ainsi qu'aux fours fixes.

**Revendications**

1. Installation de fusion de métal comportant un four métallurgique en forme de cuve, supporté par un plancher de travail (2), la cuve étant réalisée en deux parties séparables constituant respectivement un fond (11) et une paroi latérale (12) refroidie, recouverts d'un revêtement réfractaire, caractérisée en ce que la paroi latérale (12) prend appui directement sur le plancher de travail (2) et que le fond (11) est fixé sur un châssis mobile (5) de support, monté coulissant le long de guidages verticaux (71) s'étendant au-dessous du plancher de travail (2) entre ce dernier et un plancher inférieur (3), que le plancher de travail (2) est muni d'un orifice central (23) de section supérieure à celle du fond (11), à l'intérieur duquel ce dernier peut être introduit et de moyens amovibles (6) de blocage du fond (11) et que l'installation comprend des moyens (7) de soulèvement et d'abaissement du fond (11) le long des guidages (71) entre une position haute de mise en service sur le plancher de travail (2), dans le prolongement de la paroi latérale (12) et une position basse de retrait des moyens (4) de transport du fond (11) entre la position basse de retrait et un poste d'entretien à l'écart du four.

2. Installation de fusion selon la revendication 1, caractérisée en ce qu'elle comprend au moins un chariot de transport (4) circulant sur des rails placés sur le plancher inférieur (3) et constituant le moyen de transport des fonds (11) entre la position basse de retrait et un poste d'entretien.

3. Installation de fusion selon l'une des revendications 1 et 2, caractérisée par le fait que le châssis mobile (5) de support du fond (11) est muni de pattes d'appui (51) susceptibles de reposer sur des supports (7) montés coulissants le long de guidages (71) et actionnés par des vérins (72) pour l'abaissement et le soulèvement du châssis mobile (5) avec le fond (11) entre la position haute de travail et la position basse de retrait.

4. Installation de fusion selon la revendication 3, caractérisée par le fait que, dans la position haute, les supports (17) actionnés par les vérins (72) viennent se placer sous les pattes (51) du châssis mobile (5) et que, en position basse, lesdites pattes (51) viennent reposer sur des pieds (41, 42) ménagés sur le chariot de transport (4).

5. Installation de fusion selon la revendication 1, caractérisée en ce que les moyens amovibles de blocage du fond (11) comprennent au moins deux verrous (6) montés coulissants radialement sur le plancher de travail (2) entre une position écartée pour laquelle l'orifice (23) de passage du fond (11) est dégagé et une position de verrouillage pour laquelle les extrémités desdits verrous viennent se placer respectivement au-dessous de butées d'appui (53) solidaires du châssis mobile (5), ce dernier étant muni de faces d'appui inclinées (52) formant coin qui coopèrent avec des cales correspondantes (25) du plancher du travail (2) pour bloquer latéralement le châssis mobile (5) lorsque celui-ci vient en position haute de mise en service.

## Claims

1. Installation for melting metal, comprising a metallurgical furnace in the form of a vessel, supported on a work floor (2), the vessel being produced in two separable parts forming, respectively, a bottom (11) and a cooled side wall (12), which parts are covered with a refractory lining, characterized in that the side wall (12) is supported directly on the work floor (2) and in that the bottom (11) is fixed on a movable support frame (5), mounted so as to slide along vertical guides (71) extending underneath the work floor (2) between the latter and a lower floor (3), in that the work floor (2) is equipped with a central aperture (23) with a section greater than that of the bottom (11), inside which the latter may be introduced, and removable means (6) for securing the bottom (11) and in that the installation comprises means (7) for raising and lowering the bottom (11) along guides (71) between an upper working position on the work floor (2), in the extension of the side wall (12), and a lower retracted position, and means (4) for transporting the bottom (11) between the lower retracted position and a maintenance station distant from the furnace.

2. Melting installation according to Claim 1, characterized in that it comprises at least one transportation carriage (4) running on rails placed on the lower floor (3) and forming the means for transporting the bottoms (11) between the lower retracted position and a maintenance station.

3. Melting installation according to one of Claims 1 and 2, characterized in that the movable frame (5) for supporting the bottom (11) is equipped with support legs (51) capable of resting on supports (7) mounted so as to slide along guides (71) and actuated by jacks (72) for lowering and raising the movable frame (5) with the bottom (11) between the higher working position and the lower retracted position.

4. Melting installation according to Claim 3, characterized in that, in the higher position, the supports (17) actuated by the jacks (72) are placed under the legs (51) of the movable frame (5) and in that, in the lower position, the said legs (51) rest on feet (41, 42) provided on the transportation carriage (4).

5. Melting installation according to Claim 1, characterized in that the removable means for securing the bottom (11) comprise at least two bolts (6) mounted so as to slide radially on the work floor (2) between a retracted position, for which the aperture (23) passing through the bottom (11) is clear, and a locking position, for which the ends of the said bolts are placed, respectively, under support stops (53) integrally attached to the movable frame (5), the latter being equipped with inclined support faces (52) forming a wedge and cooperating with corresponding wedges (25) on the work floor (2) in order to secure the movable frame (5) laterally when the latter reaches the higher operating position.

## Patentansprüche

1. Schmelzeinrichtung für Metall bestehend aus einem als Gefäß ausgebildeten, durch eine Arbeitsbühne (2) abgestützten metallurgischen Ofen, wobei das Gefäß aus zwei trennbaren Teilen mit jeweils einem Boden (11) und einer gekühlten Seitenwand (12) besteht, die eine feuerfeste Auskleidung aufweisen, dadurch gekennzeichnet, daß sich die Seitenwand (12) unmittelbar auf der Arbeitsbühne (2) abstützt, und daß der Boden (11) auf einem beweglichen Stützrahmen (5) befestigt ist, der entlang von senkrechten, unter der Arbeitsbühne (2) zwischen dieser und einem Unterflur (3) sich erstreckenden Führungen (71) gleitend montiert ist, daß die Arbeitsbühne (2) eine mittige Öffnung (23) mit einem größeren Querschnitt als der in diese einsetzbaren Boden (11) sowie lösbare Feststellmittel (6) für den Boden (11) aufweist, und daß die Einrichtung Hebe- und Absenkmittel (7) für den entlang den Führungen (71) zwischen einer oberen Inbetriebnahmestellung auf der Arbeitsbühne (2) in der Verlängerung der Seitenwand (12) und einer niederen Ausgangslage verfahrbaren Boden (11) aufweist sowie Fördermittel (4) für den Boden (11) zwischen der niederen Ausgangslage und einer abseits vom Ofen gelegenen Wartungsstation.

2. Schmelzeinrichtung nach Anspruch 1, dadurch gekennzeichnet, daß sie mindestens einen auf im Unterflur verlegten Schienen verfahrbaren Förderwagen (4) umfaßt, der das Fördermittel für die Böden (11) zwischen der niederen Ausgangslage und einer Wartungsstation bildet.

3. Schmelzeinrichtung nach einem der Ansprüche 1 und 2, dadurch gekennzeichnet, daß der bewegliche Stützrahmen (5) für den Boden (11) Füße (51) aufweist, die auf entlang von Führungen (71) gleitbar montierten Abstützungen (7) zur Auflage kommen können, die über Zylinder (72) zum Heben und Senken des beweglichen Rahmens (5) mit dem Boden (11) zwischen der oberen Arbeitsstellung und einer niederen Ausgangslage betätigt werden.

4. Schmelzeinrichtung nach Anspruch 3, dadurch gekennzeichnet, daß die durch die Zylinder (72) betätigten Abstützungen (17) in der oberen Stellung unter die Füße (51) des beweglichen Rahmens (5) zu liegen kommen, und daß diese Füße (51) in der niederen Ausgangslage, auf am Förderwagen (4) angeordneten Stützen (41, 42) zur Auflage kommen.

5. Schmelzeinrichtung nach Anspruch 1, dadurch gekennzeichnet, daß die lösbaren Feststellmittel für den Boden (11) mindestens zwei Riegel (6) umfassen, die radial auf der Arbeitsbühne (2) zwischen einer Ausgangslage, in welcher die Durchgangsöffnung (23) für den Boden (11) frei ist, gleitend montiert sind, und einer Verriegelungsstellung, in welcher die Enden der Riegel jeweils unter an dem verfahrbaren Rahmen (5) befestigten Stützlager (53) eingeschoben werden, wobei dieser Rahmen geneigte, keilförmig ausgebildete Auflageflächen (52) aufweist, die mit entsprechenden Keilen (25) der Arbeitsbühne (2) zur seitlichen Feststellung des verfahrbaren Rahmens (5) zusammenwirken, wenn dieser in die obere Inbetriebnahmestellung gefahren wird.

FIG.1

FIG.2

FIG.3

EP 0 230 180 B1

FIG.4

FIG.6

FIG.5